# FASCICULE DE BREVET EUROPEEN

(11) **EP 3 685 226 B1**
(45) Date de publication et mention de la délivrance du brevet: **08.12.2021**
(21) Numéro de dépôt: 18766303.4
(22) Date de dépôt: 18.09.2018
(51) Int. Cl.: G03B 11/00, G03B 17/00

(54) **IMAGEUR INFRAROUGE**
INFRAROT-BILDWANDLER
INFRARED IMAGER

(30) Priorité: 18.09.2017 FR 1700941
(43) Date de publication de la demande: 29.07.2020
(73) Titulaire: Thales, 92400 Courbevoie (FR)
(72) Inventeur: PERRUCHOT, Ludovic, 78995 Elancourt Cedex (FR)
(74) Mandataire: Lavoix
(86) Numéro de dépôt international: PCT/EP2018/075247
(87) Numéro de publication internationale: WO 2019/053294

(56) Documents cités:
- EP-A2- 0 289 306
- WO-A1-2017/097857
- FR-A1- 2 950 763
- FR-A1- 3 014 194
- US-A1- 2007 170 363
- WOOD R A: "LOW-COST INFRARED IMAGERS", SCIENTIFIC HONEYWELLER, HONEYWELL'S CORPORATE. MINNEAPOLIS, US, 1 janvier 1996 (1996-01-01), pages 109-116, XP000678076, ISSN: 0196-8440

## Description

La présente invention concerne un imageur infrarouge. La présente invention concerne également un système optronique comprenant un tel imageur. La présente invention concerne aussi une plateforme comprenant un tel système optronique.

Dans le domaine de l'optronique, il est connu d'équiper des systèmes optroniques avec des imageurs infrarouges fonctionnant dans des bandes spectrales spécifiques. Les bandes spectrales de tels imageurs sont, par exemple, choisies en fonction du type de systèmes optroniques ou de l'environnement dans lesquels se trouvent les systèmes optroniques. Par exemple, pour des systèmes optroniques longue portée ou évoluant dans des climats humides, la bande spectrale comportant la gamme de longueurs d'onde comprise entre 3 micromètres (µm) et 5 µm, dite « bande II » est préférée. En revanche, pour des systèmes optroniques courte portée ou évoluant dans des climats froids, la bande spectrale comportant la gamme de longueurs d'onde comprise entre 8 µm et 12 µm, dite «bande III» est préférée. En effet, la bande III émet plus de photons à température ambiante que la bande II. Par contre, la bande II présente une meilleure transmission atmosphérique que la bande spectrale III.

Dans d'autres applications, la bande spectrale comportant la gamme de longueurs d'onde comprise entre 1 µm et 2 µm, dite « bande I» est préférée, une telle bande présentant l'avantage de limiter la diffraction.

Pour certaines applications, il est connu d'utiliser des systèmes fonctionnant dans deux bandes spectrales distinctes.

Cependant, de tels systèmes s'avèrent coûteux, consommateurs de ressources et volumineux.

Le document FR 2 950 763 A décrit un exemple de terminal relais destiné à communiquer avec d'une part un premier terminal utilisateur propre à transmettre un faisceau dans une première bande spectrale, et d'autre part un deuxième terminal utilisateur apte à transmettre un faisceau dans une deuxième bande spectrale.

Il existe donc un besoin pour un système propre à fonctionner dans au moins deux bandes spectrales distinctes, qui soit moins consommateur de ressources et moins volumineux.

A cet effet, l'invention a pour objet un imageur infrarouge propre à détecter un flux infrarouge dans une première bande spectrale et une deuxième bande spectrale, la première bande et la deuxième bande étant continues et disjointes l'une de l'autre, l'imageur comprenant une enceinte, l'enceinte présentant une première température, l'enceinte comportant :
- un séparateur séparant un flux infrarouge incident en deux flux distincts, le premier flux étant la portion du flux infrarouge incident dans la première bande spectrale et le deuxième flux étant la portion du flux infrarouge incident dans la deuxième bande spectrale,
- un unique détecteur propre à détecter un flux dans les deux bandes spectrales, l'unique détecteur étant refroidi à une deuxième température, la deuxième température étant strictement inférieure à la première température,
- une optique de commutation mobile entre une première position dans laquelle le premier flux est envoyé vers l'unique détecteur et une deuxième position dans laquelle le deuxième flux est envoyé vers l'unique détecteur, et
- un premier réflecteur présentant un premier fond à une température strictement inférieure à la première température, le premier réflecteur étant positionné pour que l'image du premier fond dans la première bande spectrale par l'optique de commutation dans la deuxième position soit située sur l'unique détecteur.

Selon des modes de réalisation particuliers, l'imageur comprend une ou plusieurs des caractéristiques suivantes, prises isolément ou suivant toutes les combinaisons techniquement possibles :
l'unique détecteur est réalisé en un matériau choisi parmi le Tellurure de Mercure Cadmium, l'Arséniure d'Indium-Gallium et l'Antimoniure d'Indium.
- l'imageur comporte un deuxième réflecteur présentant un deuxième fond à une température strictement inférieure à la première température, le deuxième réflecteur étant positionné pour que l'image du deuxième fond dans la deuxième bande spectrale par l'optique de commutation dans la première position soit située sur l'unique détecteur.
- le premier flux présente un premier débit instantané, le deuxième flux présentant un deuxième débit instantané strictement inférieur au premier débit, l'imageur comportant un filtre réduisant le débit instantané du premier flux, l'unique détecteur présentant un premier temps d'accumulation du premier flux et un deuxième temps d'accumulation du deuxième flux, le ratio entre le premier temps d'accumulation et le deuxième temps d'accumulation étant supérieur ou égal à 0,5 et inférieur ou égal à 1,5.
- le ou chaque réflecteur est un miroir à effet Narcisse.
- l'imageur comporte, en outre :
   - une première voie optique propre à transporter le premier flux entre le séparateur et l'optique de commutation,
   - une deuxième voie optique propre à transporter le deuxième flux entre le séparateur et l'optique de commutation, chaque voie optique comprend au moins un élément choisi dans le groupe constitué de : une lentille optique, un miroir, un prisme, une lame séparatrice et une optique de grossissement propre à appliquer un coefficient de grossissement au flux transporté par ladite voie optique.
- le séparateur est une lame dichroïque.
- au moins l'une des propriétés suivantes est vérifiée :
   - la première bande spectrale comporte des longueurs d'onde comprises entre 8 micromètres et 12 micromètres,
   - la première bande spectrale comporte des longueurs d'onde comprises entre 3 micromètres et 5 micromètres,
   - la deuxième bande spectrale comporte des longueurs d'onde comprises entre 1 micromètres et 2 micromètres, et
   - la deuxième bande spectrale comporte des longueurs d'onde comprises entre 3 micromètres et 5 micromètres.

L'invention concerne également un système optronique comprenant un imageur tel que décrit précédemment.

L'invention concerne aussi une plateforme comprenant un système optronique tel que décrit précédemment.

D'autres caractéristiques et avantages de l'invention apparaîtront à la lecture de la description qui va suivre de modes de réalisation de l'invention, donnée à titre d'exemple uniquement et en référence aux dessins qui sont :
- figure 1, une représentation schématique d'un exemple d'un imageur infrarouge selon un premier mode de réalisation de l'invention, l'imageur comprenant une optique de commutation,
- figure 2, une représentation schématique de l'imageur infrarouge de la figure 1 en fonctionnement, l'optique de commutation de l'imageur étant dans une première position,
- figure 3, une représentation schématique de l'imageur infrarouge de la figure 1 en fonctionnement, l'optique de commutation de l'imageur étant dans une deuxième position,
- figure 4, une représentation schématique d'un exemple d'un imageur infrarouge selon un deuxième mode de réalisation de l'invention, l'imageur comprenant une optique de commutation, l'imageur étant représenté en fonctionnement avec l'optique de commutation dans une première position,
- figure 5, une représentation schématique de l'imageur infrarouge de la figure 4, l'imageur étant représenté en fonctionnement avec l'optique de commutation dans une deuxième position, et
- figure 6, une représentation schématique d'un imageur infrarouge selon un troisième mode de réalisation de l'invention, l'imageur comprenant une optique de commutation, l'imageur étant représenté en fonctionnement avec l'optique de commutation dans une deuxième position.

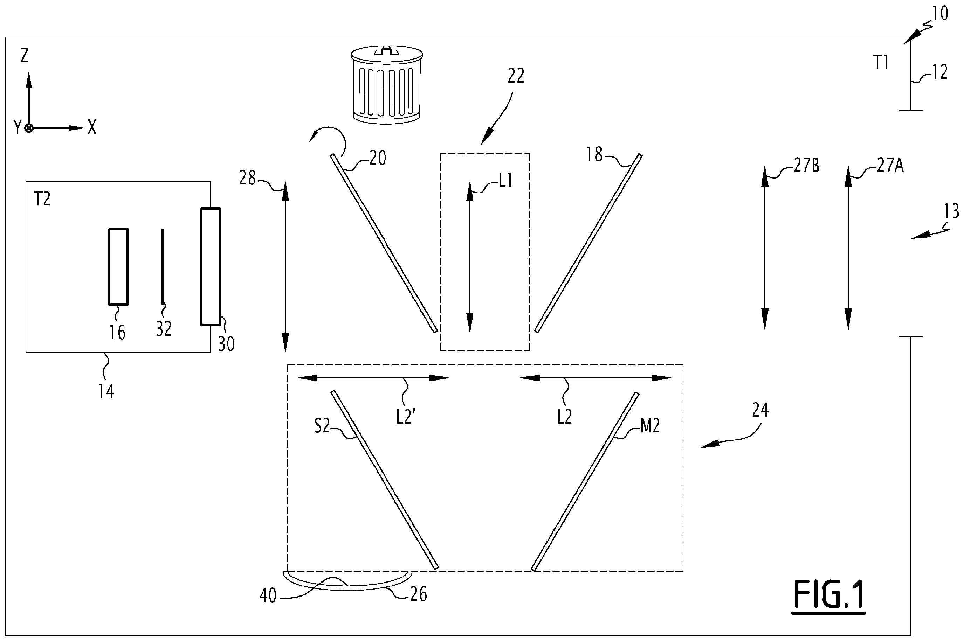

Un imageur infrarouge 10 est illustré sur la figure 1.

L'imageur infrarouge 10 est, par exemple, destiné à être intégré dans un système optronique. Un tel système optronique est, par exemple, un système de désignation laser. Le système optronique est, par exemple, lui-même destiné à être intégré dans une plateforme, telle que la plateforme d'un aéronef.

L'imageur infrarouge 10 est propre à détecter un flux infrarouge dans au moins une première bande spectrale B1 et une deuxième bande spectrale B2. La première bande spectrale B1 et la deuxième bande spectrale B2 sont continues et disjointes l'une de l'autre. Une bande spectrale est dite « continue » lorsque ladite bande contient toutes les valeurs de longueurs d'ondes présentes dans l'intervalle délimité par les bornes extrêmes de ladite bande.

Par exemple, la première bande B1 comporte la gamme de longueurs d'onde comprise entre 8 µm et 12 µm (qui est aussi appelée bande III) et la deuxième bande B2 comporte la gamme de longueurs d'onde comprise entre 3 µm et 5 µm (qui est aussi appelée bande II). En variante, la première bande B1 comporte la gamme de longueurs d'onde comprise entre 8 µm et 12 µm et la deuxième bande B2 comporte la gamme de longueurs d'onde comprise entre 1 µm et 2 µm (qui est aussi appelée bande I). Encore en variante, la première bande B1 comporte la gamme de longueurs d'onde comprise entre 3 µm et 5 µm et la deuxième bande B2 comporte la gamme de longueurs d'onde comprise entre 1 µm et 2 µm.

En variante, les bandes spectrales comportent uniquement une des gammes de longueurs d'onde précédente.

Selon encore une autre variante, les bandes spectrales sont strictement incluses dans une des gammes de longueurs d'onde précédentes.

L'imageur 10 comprend une enceinte 12.

Dans la suite de la description, il est défini une direction longitudinale X représentée sur la figure par un axe X et correspondant à la longueur de l'enceinte 12. Il est, en outre, défini une première direction transversale, dite d'élévation Z, perpendiculaire à la direction longitudinale X et représentée sur la figure par un axe Z. Il est, également, défini une deuxième direction transversale Y, perpendiculaire à la direction longitudinale X et à la première direction transversale Z. La deuxième direction transversale Y est représentée sur la figure par un axe Y.

Les dimensions de l'enceinte 12 sont, par exemple, comprises entre 10 centimètres (cm) et 20 cm suivant la direction longitudinale X, comprises entre 5 cm et 15 cm suivant la première direction transversale Z et comprises entre 5 cm et 15 cm suivant la deuxième direction transversale Y.

L'enceinte 12 présente une première température T1. La première température T1 est, par exemple, comprise entre 28°C et 32°C.

Comme visible sur la figure 1, l'enceinte 12 présente une ouverture 13 pour le passage d'un flux lumineux incident FI en provenance de l'extérieur de l'enceinte 12.

Dans un premier mode de réalisation illustré sur la figure 1, l'enceinte 12 comprend un cryostat 14, un détecteur 16, un séparateur 18, une optique de commutation 20, une première voie optique 22, une deuxième voie optique 24 et un premier réflecteur 26. En outre, dans le mode de réalisation illustré sur la figure 1, l'imageur 10 comprend deux optiques de transport 27A, 27B et une optique de focalisation 28.

En variante, l'enceinte 10 comprend une seule optique de transport 27A, 27B ou plus de deux optiques de transport 27A, 27B. Encore en variante, l'enceinte 12 comprend au moins deux optiques de focalisation 28.

Le cryostat 14 est une enceinte fermée, thermiquement isolée et maintenue sous vide. Le cryostat 14 est maintenu à une deuxième température T2. La deuxième température T2 est strictement inférieure à la première température T1. La deuxième température T2 est, par exemple, inférieure ou égale à 80 °K.

Le cryostat 14 est équipé d'une fenêtre transparente ou hublot 30. Le hublot 30 est propre à transmettre à l'intérieur du cryostat 14 tout flux infrarouge dans la première ou la deuxième bande spectrale B1, B2 arrivant sur le hublot 30.

Le détecteur 16 est l'unique détecteur de l'imageur 10.

Le détecteur 16 comprend un unique capteur propre à détecter un flux infrarouge dans la première et la deuxième bande spectrale B1, B2.

Le détecteur 16 est, par exemple, un détecteur réalisé en Tellurure de Mercure Cadmium (MCT), dit « détecteur MCT ». Un tel détecteur MCT est notamment adapté pour détecter les bandes spectrales I, Il et III.

En variante, le détecteur 16 est réalisé en Arséniure d'Indium-Gallium (InGaAs).

Encore en variante, le détecteur 16 est réalisé en Antimoniure d'Indium (InSb).

Le détecteur 16 est disposé à l'intérieur du cryostat 14 de sorte à être maintenu refroidi à la deuxième température T2. En outre, le détecteur 16 est disposé en vis-à-vis du hublot 30 du cryostat 14 de sorte à recevoir tout flux infrarouge transmis par le hublot 30.

Dans le mode de réalisation illustré sur la figure 1, le détecteur 16 est équipé d'un filtre froid 32 propre à sélectionner une bande spectrale d'analyse. Il est entendu par l'expression «filtre froid », un filtre qui a été refroidi à basse température. Il est entendu par l'expression « basse température », une température inférieure ou égale à 150 °K.

Dans le cadre de l'invention, la bande spectrale d'analyse sélectionnée par le filtre froid 32 comprend au moins la première et la deuxième bande spectrale B1, B2.

Le séparateur 18 est propre à séparer un flux infrarouge incident FI en deux flux distincts : un premier flux F1 et un deuxième flux F2. Le premier flux F1 est la portion du flux infrarouge incident FI dans la première bande spectrale B1. Le deuxième flux F2 est la portion du flux infrarouge incident FI dans la deuxième bande spectrale B2. Le flux infrarouge incident FI est un flux infrarouge en provenance de l'extérieur de l'enceinte 12 et arrivant sur l'enceinte 12 via l'entrée 13.

Le premier flux F1 présente un premier débit instantané et le deuxième flux F2 présente un deuxième débit instantané. Il est entendu par le terme « débit instantané », le nombre de photons par seconde. Le deuxième débit instantané est strictement inférieur au premier débit.

Le détecteur 16 présente un premier temps d'accumulation (aussi appelé temps d'intégration) du premier flux F1 et un deuxième temps d'accumulation du deuxième flux F2.

Avantageusement, le filtre froid 32 du détecteur 16 présente une bande spectrale d'analyse pour laquelle le débit instantané du premier flux F1 est réduit. Le ratio entre le premier temps d'accumulation et le deuxième temps d'accumulation est, de préférence, supérieur ou égal à 0,5 et est inférieur ou égal à 1,5.

Le séparateur 18 est, par exemple, propre à transmettre le premier flux F1 et à réfléchir le deuxième flux F2, ou inversement. Dans le mode de réalisation illustré en figure 1, le séparateur 18 est propre à transmettre le premier flux F1 et à réfléchir le deuxième flux F2.

Le séparateur 18 est, par exemple, une lame dichroïque, aussi appelée lame séparatrice.

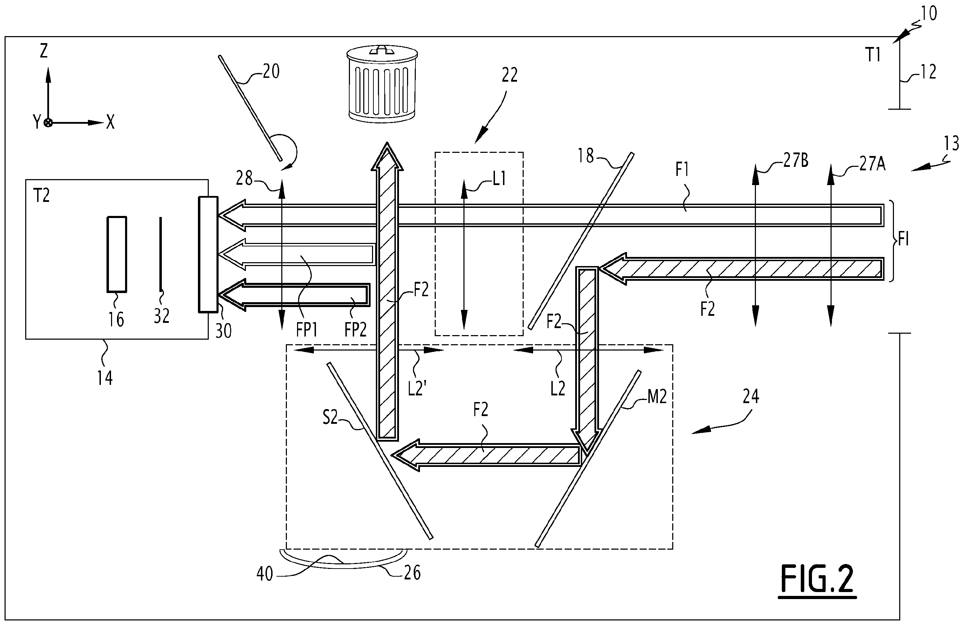

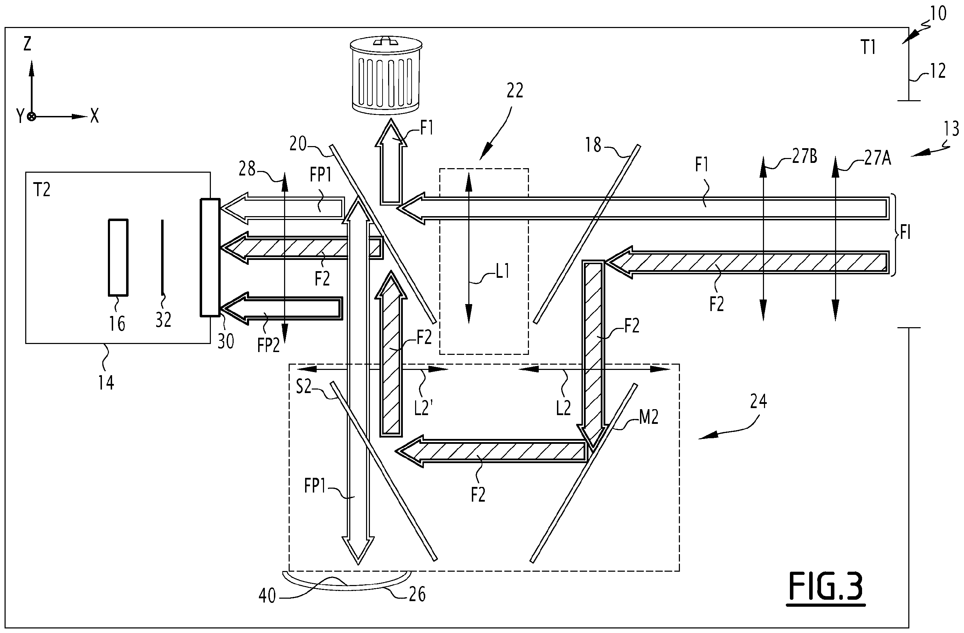

L'optique de commutation 20 est mobile entre une première position, illustrée sur la figure 2, dans laquelle le premier flux F1 est envoyé vers le détecteur 16 et une deuxième position, illustrée sur la figure 3, dans laquelle le deuxième flux F2 est envoyé vers le détecteur 16. Dans la première position, le deuxième flux F2 n'est pas envoyé vers le détecteur 16 et, dans la deuxième position, le premier flux F1 n'est pas envoyé vers le détecteur 16.

Plus précisément, dans la première position, l'optique de commutation 20 n'est pas présente sur le chemin optique du premier flux F1 et du deuxième flux F2. En revanche, dans la deuxième position, l'optique de commutation 20 est présente sur le chemin optique de chacun du premier flux F1 et du deuxième flux F2. Ainsi, dans la deuxième position, l'optique de commutation 20 est propre à réfléchir le premier flux F1 et le deuxième flux F2.

L'optique de commutation 20 est, par exemple, un miroir commutant.

La première voie optique 22 est propre à transporter le premier flux F1 entre le séparateur 18 et l'optique de commutation 20.

La première voie optique 22 comprend au moins un élément choisi dans le groupe constitué de : une lentille optique, un miroir, un prisme, une lame séparatrice et une optique de grossissement propre à appliquer un coefficient de grossissement au flux transporté par ladite voie optique.

Dans le mode de réalisation illustré sur la figure 1, la première voie optique 22 est délimitée par une zone en pointillés. La première voie optique de la figure 1 comprend une lentille convergente L1.

La deuxième voie optique 24 est propre à transporter le deuxième flux F2 entre le séparateur 18 et l'optique de commutation 20.

La deuxième voie optique 24 comprend au moins un élément choisi dans le groupe constitué de : une lentille optique, un miroir, un prisme, une lame séparatrice et une optique de grossissement propre à appliquer un coefficient de grossissement au flux transporté par ladite voie optique.

Dans le mode de réalisation illustré sur la figure 1, la deuxième voie optique 24 est délimitée par une zone en pointillés. La deuxième voie optique 24 de la figure 1 comprend, dans le sens de propagation de la lumière, depuis l'amont vers l'aval : une lentille convergente L2, un miroir M2, une lame séparatrice S2 et une autre lentille convergente L2'. La lame séparatrice S2 est propre à réfléchir les flux appartenant à la deuxième bande spectrale B2 et à transmettre les flux appartenant à la première bande spectrale B1.

Le premier réflecteur 26 présente un premier fond 40 à une température strictement inférieure à la première température T1.

Le premier réflecteur 26 est positionné pour que l'image du premier fond 40 dans la première bande spectrale B1 par l'optique de commutation 20 dans la deuxième position soit située sur le détecteur 16. Plus précisément, le premier réflecteur 26 est positionné de sorte à recevoir tout flux dans la première bande spectrale B1 transmis par la lame séparatrice S2 de la deuxième voie optique 24 et pour renvoyer ledit flux vers le détecteur 16. Cela revient à renvoyer sur le détecteur 16 sa propre image dans la première bande spectrale B1. Le détecteur 16 étant refroidi dans le cryostat 14, le premier réflecteur 26 est un élément vu comme froid par le détecteur 16.

Le premier réflecteur 26 est, par exemple, un miroir à effet Narcisse.

En variante, le premier réflecteur 26 est un corps noir à basse température. La température d'un tel corps noir est typiquement inférieure ou égale à 250 °K.

Les optiques de transport 27A, 27B sont disposées entre l'entrée 13 de l'enceinte 12 et le séparateur 18. Chaque optique de transport 27A, 27B est, par exemple, une lentille convergente.

L'optique de focalisation 28 est propre à focaliser sur le détecteur 16 tout flux infrarouge dans la première et la deuxième bande spectrale B1, B2 en aval de l'optique de commutation 20.

L'optique de focalisation 28 est disposée entre l'optique de commutation 20 et le détecteur 16. L'optique de focalisation 28 est, par exemple, une lentille convergente.

Le fonctionnement de l'imageur 10 selon le premier mode de réalisation illustré sur la figure 1 va maintenant être décrit en référence aux figures 2 et 3.

Initialement, un flux infrarouge incident FI est transporté depuis l'entrée 13 vers le séparateur 18 par les optiques de transport 27. Le flux infrarouge incident FI est formé d'au moins un premier flux F1 et un deuxième flux F2. Le premier flux F1 et le deuxième flux F2 sont distincts l'un de l'autre. Le premier flux F1 est la portion du flux infrarouge incident FI dans la première bande spectrale B1. Le deuxième flux F2 est la portion du flux infrarouge incident FI dans la deuxième bande spectrale B2.

Le séparateur 18 transmet le premier flux F1 et réfléchit le deuxième flux F2.

La première voie optique 22 transporte le premier flux F1 entre le séparateur 18 et l'optique de commutation 20.

La deuxième voie optique 24 transporte le deuxième flux F2 entre le séparateur 18 et l'optique de commutation 20. Plus précisément, le deuxième flux F2 est réfléchi sur le miroir M2, puis sur la lame séparatrice S2 de la deuxième voie optique 24.

Lorsque l'optique de commutation 20 est dans la première position, illustrée sur la figure 2, l'optique de commutation 20 ne se trouve pas sur le chemin optique du premier flux F1 et du deuxième flux F2. Le premier flux F1 transmis par la première voie optique 22 est alors focalisé par l'optique de focalisation 28 sur le détecteur 16. Le deuxième flux F2 transmis par la deuxième voie optique 24 est quant à lui alors absorbé par les parois de l'enceinte 12.

Ainsi, lorsque l'optique de commutation 20 est dans la première position, le détecteur 16 reçoit le premier flux F1, un premier flux parasite FP1 dans la première bande spectrale B1 et un deuxième flux parasite FP2 dans la deuxième bande spectrale B2. Le premier flux parasite FP1 est issu de la chaleur dégagée par le séparateur 18 et par les optiques de la première voie optique 22 qui sont à la première température T1 de l'enceinte 12. Le premier flux parasite FP1 se distingue du premier flux F1 par le fait que ledit premier flux parasite FP1 est détecté par le détecteur 16 aussi bien en présence qu'en l'absence du premier flux F1. Le deuxième flux parasite FP2 est issu de la chaleur dégagée par le séparateur 18 et par les optiques de la deuxième voie optique 24 qui sont à la première température T1 de l'enceinte 12. Le deuxième flux parasite FP2 se distingue du deuxième flux F2 par le fait que ledit deuxième flux parasite FP2 est détecté par le détecteur 16 aussi bien en présence qu'en l'absence du deuxième flux F2. Le premier et le deuxième flux parasite contribuent en tant que bruit à détériorer le rapport signal sur bruit du détecteur 16.

Lorsque l'optique de commutation 20 est dans la deuxième position, illustrée sur la figure 3, l'optique de commutation 20 se trouve sur le chemin optique du premier flux F1 et du deuxième flux F2. Le premier flux F1 transmis par la première voie optique 22 est alors réfléchi par l'optique de commutation 20 vers les parois de l'enceinte 12 et est absorbé par les parois de l'enceinte 12. Le deuxième flux F2 transmis par la deuxième voie optique 24 est réfléchi par l'optique de commutation 20 de sorte à être focalisé par l'optique de focalisation 28 sur le détecteur 16.

Lorsque l'optique de commutation 20 est dans la deuxième position, le détecteur 16 reçoit alors le deuxième flux F2, un premier flux parasite FP1 dans la première bande spectrale B1 et un deuxième flux parasite FP2 dans la deuxième bande spectrale B2.

Toutefois, le premier flux parasite FP1 est un flux vu par le détecteur 16 comme étant refroidi à la deuxième température T2 imposée par le cryostat 14. En effet, le premier flux parasite FP1 est transmis par la lame séparatrice S2 de la deuxième voie optique 24 vers le premier réflecteur 26, et est réfléchi par le premier réflecteur 26 dans le sens opposé à travers la lame séparatrice S2 vers le détecteur 16. Le premier réflecteur 26 étant positionné pour que l'image du premier fond 40 par l'optique de commutation 20 dans la deuxième position soit située sur le détecteur 16, le premier flux parasite FP1 est vu par le détecteur 16 comme étant à la température du détecteur 16, c'est-à-dire à la deuxième température T2. Ainsi, l'image du détecteur 16 par le premier flux parasite FP1 est superposée à l'image utile formée à partir du deuxième flux F2.

L'imageur 10 permet donc de séparer, via le séparateur 18, deux flux F1, F2 issus d'un même flux infrarouge incident FI, de les traiter séparément dans la première et la deuxième voie optique 22, 24, puis de les recombiner sur le détecteur 16 au moyen de l'optique de commutation 20. Un tel imageur 10 permet également de traiter séparément des premier et deuxième flux F1, F2, les bruits parasites générés par lesdits flux F1, F2 dans l'imageur 10.

Ainsi, l'imageur 10 selon le premier mode de réalisation permet de détecter deux bandes spectrales B1, B2 continues et disjointes à partir d'un unique détecteur 16 couvrant les deux bandes spectrales B1, B2, d'une optique de commutation 20 et d'un séparateur 18 permettant de sélectionner la bande spectrale souhaitée.

Lorsque l'optique de commutation 20 est dans la deuxième position, le premier réflecteur 26 associée à la lame séparatrice S2 permet de rendre négligeable le bruit généré par les photons de la bande non utilisée (première bande spectrale B1) afin d'obtenir un imageur 10 pouvant fonctionner dans chacune des deux bandes en ayant des performances équivalentes à des imageurs spécifiques à chacune de la première et de la deuxième bande spectrale B1, B2.

L'imageur 10 est également moins consommateur de ressources et moins volumineux que les imageurs de l'état de la technique, puisqu'un unique détecteur 16 est utilisé pour réaliser l'imageur 10.

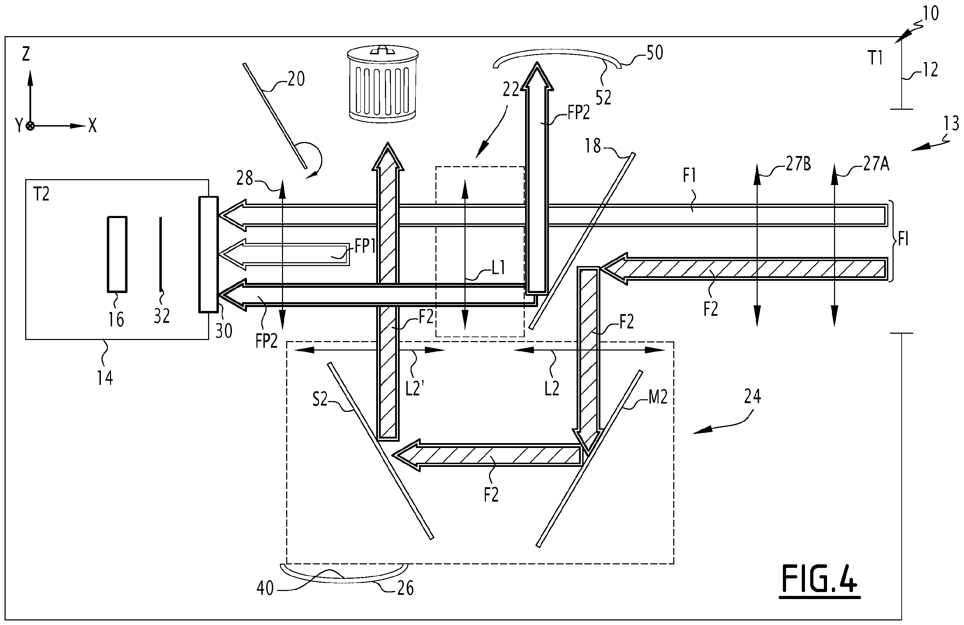

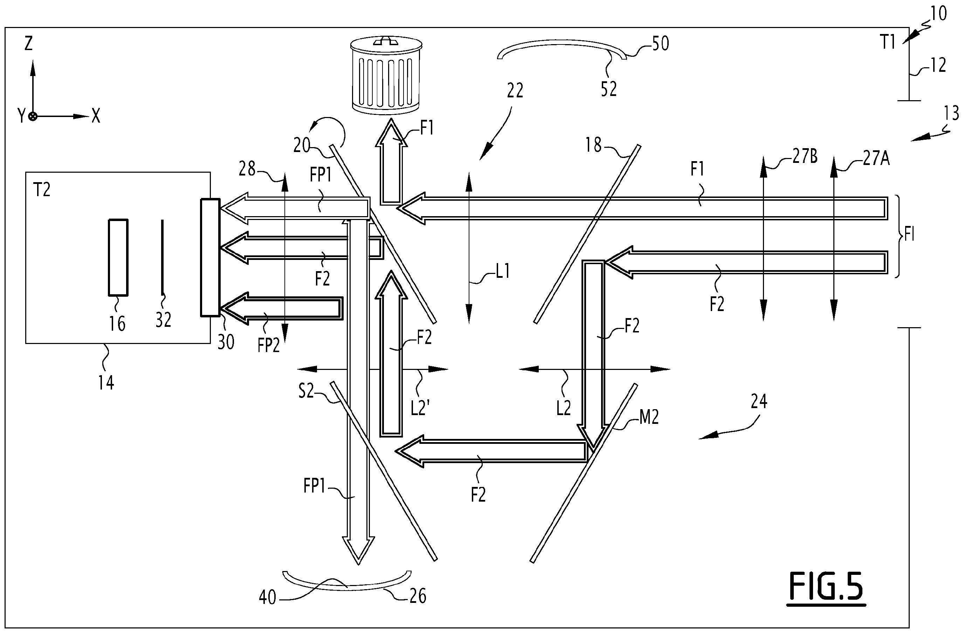

Selon un deuxième mode de réalisation tel que visible sur les figures 4 et 5, les éléments identiques à l'imageur 10 selon le premier mode de réalisation décrit en regard des figures 1 à 3 ne sont pas répétés. Seules les différences sont mises en évidence.

L'imageur 10 comprend, en outre, un deuxième réflecteur 50 présentant un deuxième fond 52 à une température inférieure à la première température T1.

Le deuxième réflecteur 50 est positionné pour que l'image du deuxième fond 52 dans la deuxième bande spectrale B2 par l'optique de commutation 20 dans la première position soit située sur le détecteur 16. Plus précisément, le deuxième réflecteur 50 est positionné de sorte à recevoir tout flux dans la deuxième bande spectrale B2 réfléchi par le séparateur 18 et pour renvoyer ledit flux vers le détecteur 16. Cela revient à renvoyer sur le détecteur 16 sa propre image dans la deuxième bande spectrale B2. Le détecteur 16 étant refroidi dans le cryostat 14, le deuxième réflecteur 50 est un élément vu comme froid par le détecteur 16.

Le deuxième réflecteur 50 est, par exemple, un miroir à effet Narcisse.

En variante, le deuxième réflecteur 50 est un corps noir à basse température. La température d'un tel corps noir est typiquement inférieure ou égale à 250 °K.

Dans ce qui suit seules les différences de fonctionnement de l'imageur 10 selon le deuxième mode de réalisation par rapport au premier mode de réalisation sont mises en évidence. Les étapes identiques ne sont pas répétées.

Lorsque l'optique de commutation 20 est dans la première position, le détecteur 16 reçoit le premier flux F1, un premier flux parasite FP1 dans la première bande spectrale B1 et un deuxième flux parasite FP2 dans la deuxième bande spectrale B2.

Toutefois, le deuxième flux parasite FP2 est un flux vu par le détecteur 16 comme étant refroidi à la deuxième température T2 imposée par le cryostat 14. En effet, le deuxième flux parasite FP2 est réfléchi par le séparateur 18 vers le deuxième réflecteur 50, et est réfléchi par le deuxième réflecteur 50 dans le sens opposé à travers le séparateur 18 vers le détecteur 16. Le deuxième réflecteur 50 étant positionné pour que l'image du deuxième fond 52 par l'optique de commutation 20 dans la première position soit située sur le détecteur 16, le deuxième flux parasite FP2 est vu par le détecteur 16 comme étant à la température du détecteur 16, c'est-à-dire à la deuxième température T2. Ainsi, l'image du détecteur 16 par le deuxième flux parasite FP2 est superposée à l'image utile formée à partir du premier flux F1.

Ainsi, outre les avantages du premier mode de réalisation, l'imageur 10 selon le deuxième mode de réalisation permet, lorsque l'optique de commutation 20 est dans la première position de rendre négligeable le bruit généré par les photons de la bande non utilisée (deuxième bande spectrale B2) afin d'obtenir un imageur 10 pouvant fonctionner dans chacune des deux bandes en ayant des performances équivalentes à des imageurs spécifiques à chacune de la première et de la deuxième bande spectrale B1, B2. Le deuxième mode de réalisation permet donc de réduire encore les bruits parasites.

Un tel imageur 10 s'avère notamment avantageux lorsque le ratio entre le premier et le deuxième temps d'accumulation est supérieur ou égal à 0,5 et est inférieur ou égal à 1,5. En effet, dans ce cas, lorsque l'optique de commutation 20 est dans la première position, le deuxième bruit parasite FP2 n'est pas toujours négligeable. Le deuxième réflecteur 50 associé au séparateur 18 permet alors de refroidir pour le détecteur 16 le deuxième bruit FP2 et donc de le rendre négligeable pour le détecteur 16.

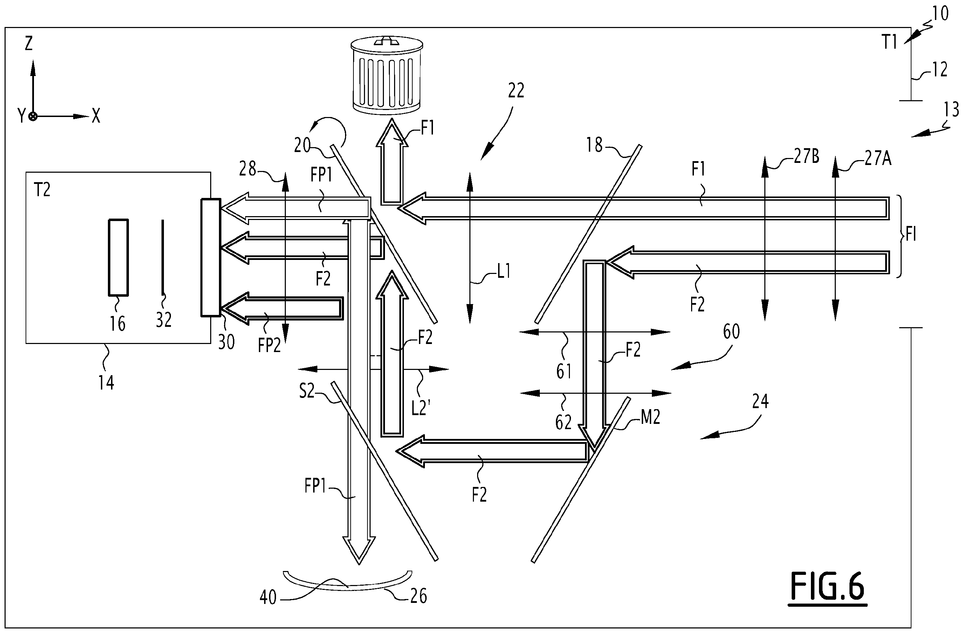

Selon un troisième mode de réalisation tel que visible sur la figure 6, les éléments identiques à l'imageur 10 selon le premier mode de réalisation décrit en regard des figures 1 à 3 ne sont pas répétés. Seules les différences sont mises en évidence.

Dans le troisième mode de réalisation, la deuxième voie optique 24 comprend un ensemble de grossissement 60 à la place de la lentille convergente L2. L'ensemble de grossissement 60 est propre à appliquer un coefficient de grossissement au deuxième flux F2 transporté par la deuxième voie optique 24. Le coefficient de grossissement est, par exemple, égal à 4. Dans l'exemple illustré sur la figure 6, l'ensemble de grossissement 60 comprend deux lentilles convergentes 61, 62.

Dans ce qui suit seules les différences de fonctionnement de l'imageur 10 selon le troisième mode de réalisation par rapport au premier mode de réalisation sont mises en évidence. Les étapes identiques ne sont pas répétées.

Lors du passage du deuxième flux F2 dans la deuxième voie optique 24, un coefficient de grossissement est appliqué sur ledit deuxième flux F2.

Cela permet d'obtenir une image grossie sur le détecteur 16 à partir du deuxième flux F2.

En variante, l'ensemble de grossissement 60 ou un autre ensemble de grossissement est intégré dans la première voie optique 22.

Encore en variante, l'imageur 10 comprend les éléments du troisième mode de réalisation, ainsi que le deuxième réflecteur 50 du deuxième mode de réalisation.

En complément facultatif de chacun des modes de réalisation précédents, l'enceinte 12 comprend des collecteurs, aussi appelés «pièges à lumière ». Les collecteurs sont propres à collecter les flux envoyés vers les parois de l'enceinte 12 de sorte à éviter la génération de réflexions parasites dans l'enceinte 12.

## Revendications

1. Imageur infrarouge (10) propre à détecter un flux infrarouge dans une première bande spectrale et une deuxième bande spectrale (B1, B2), la première bande (B1) et la deuxième bande (B2) étant continues et disjointes l'une de l'autre, l'imageur (10) comprenant une enceinte (12), l'enceinte (12) présentant une première température (T1), l'enceinte (12) comportant :
- un séparateur (18) séparant un flux infrarouge incident (FI) en deux flux distincts, le premier flux (F1) étant la portion du flux infrarouge incident (FI) dans la première bande spectrale (B1) et le deuxième flux (F2) étant la portion du flux infrarouge incident (FI) dans la deuxième bande spectrale (B2),
- un unique détecteur (16) propre à détecter un flux dans les deux bandes spectrales (B1, B2), l'unique détecteur (16) étant refroidi à une deuxième température (T2), la deuxième température (T2) étant strictement inférieure à la première température (T1),
- une optique de commutation (20) mobile entre une première position dans laquelle le premier flux (F1) est envoyé vers l'unique détecteur (16) et une deuxième position dans laquelle le deuxième flux (F2) est envoyé vers l'unique détecteur (16), et
- un premier réflecteur (26) présentant un premier fond (40) à une température strictement inférieure à la première température (T1), le premier réflecteur (26) étant positionné pour que l'image du premier fond (40) dans la première bande spectrale (B1) par l'optique de commutation (20) dans la deuxième position soit située sur l'unique détecteur (16).

2. Imageur (10) selon la revendication 1, dans lequel l'unique détecteur (16) est réalisé en un matériau choisi parmi le Tellurure de Mercure Cadmium, l'Arséniure d'Indium-Gallium et l'Antimoniure d'Indium.

3. Imageur (10) selon la revendication 1 ou 2, dans lequel l'imageur (10) comporte un deuxième réflecteur (50) présentant un deuxième fond (52) à une température strictement inférieure à la première température (T1), le deuxième réflecteur (50) étant positionné pour que l'image du deuxième fond (52) dans la deuxième bande spectrale (B2) par l'optique de commutation (20) dans la première position soit située sur l'unique détecteur (16).

4. Imageur (10) selon l'une quelconque des revendications 1 à 3, dans lequel le premier flux (F1) présente un premier débit instantané, le deuxième flux (F2) présentant un deuxième débit instantané strictement inférieur au premier débit, l'imageur (10) comportant un filtre (32) réduisant le débit instantané du premier flux (F1), l'unique détecteur (16) présentant un premier temps d'accumulation du premier flux (F1) et un deuxième temps d'accumulation du deuxième flux (F2), le ratio entre le premier temps d'accumulation et le deuxième temps d'accumulation étant supérieur ou égal à 0,5 et inférieur ou égal à 1,5.

5. Imageur (10) selon l'une quelconque des revendications 1 à 4, dans lequel le ou chaque réflecteur (26 ; 50) est un miroir à effet Narcisse.

6. Imageur (10) selon l'une quelconque des revendications 1 à 5, dans lequel l'imageur (10) comporte, en outre :
- une première voie optique (22) propre à transporter le premier flux (F1) entre le séparateur (18) et l'optique de commutation (20), et
- une deuxième voie optique (24) propre à transporter le deuxième flux (F2) entre le séparateur (18) et l'optique de commutation (20),
chaque voie optique (22, 24) comprend au moins un élément choisi dans le groupe constitué de : une lentille optique, un miroir, un prisme, une lame séparatrice et une optique de grossissement propre à appliquer un coefficient de grossissement au flux transporté par ladite voie optique.

7. Imageur (10) selon l'une quelconque des revendications 1 à 6, dans lequel le séparateur (18) est une lame dichroïque.

8. Imageur (10) selon l'une quelconque des revendications 1 à 7, dans lequel au moins l'une des propriétés suivantes est vérifiée :
- la première bande spectrale (B1) comporte des longueurs d'onde comprises entre 8 micromètres et 12 micromètres,
- la première bande spectrale (B1) comporte des longueurs d'onde comprises entre 3 micromètres et 5 micromètres,
- la deuxième bande spectrale (B2) comporte des longueurs d'onde comprises entre 1 micromètres et 2 micromètres, et
- la deuxième bande spectrale (B2) comporte des longueurs d'onde comprises entre 3 micromètres et 5 micromètres.

9. Système optronique comprenant un imageur (10) selon l'une quelconque des revendications 1 à 8.

10. Plateforme comportant un système optronique selon la revendication 9.

## Patentansprüche

1. Infrarot-Bildwandler (10), der zum Erfassen eines Infrarotflusses in einem ersten Spektralband und einem zweiten Spektralband (B1, B2) geeignet ist, wobei das erste Band (B1) und das zweite Band (B2) kontinuierlich und voneinander getrennt sind, der Bildwandler (10) umfassend ein Gehäuse (12), wobei das Gehäuse (12) eine erste Temperatur (T1) aufweist, das Gehäuse (12) umfassend:
- einen Separator (18), der einen einfallenden Infrarotfluss (FI) in zwei verschiedene Flüsse aufteilt, wobei der erste Fluss (F1) der Anteil des einfallenden Infrarotflusses (FI) in dem ersten Spektralband (B1) und der zweite Fluss (F2) der Anteil des einfallenden Infrarotflusses (FI) in dem zweiten Spektralband (B2) ist
- einen einzelnen Detektor (16), der geeignet ist, um den Fluss in den zwei Spektralbändern (B1, B2) zu erfassen, wobei der einzelne Detektor (16) auf eine zweite Temperatur (T2) gekühlt wird, wobei die zweite Temperatur (T2) strikt niedriger ist als die erste Temperatur (T1),
- eine Schaltoptik (20), die zwischen einer ersten Position, in der der erste Strom (F1) an den einzelnen Detektor (16) gesendet wird, und einer zweiten Position, in der der zweite Strom (F2) an den einzelnen Detektor (16) gesendet wird, beweglich ist, und
- einen ersten Reflektor (26), der einen ersten Hintergrund (40) mit einer Temperatur aufweist, die streng unter der ersten Temperatur (T1) ist, wobei der erste Reflektor (26) positioniert ist, damit sich das Bild des ersten Hintergrunds (40) in dem ersten Spektralband (B1) durch die Schaltoptik (20) in der zweiten Position auf dem einzelnen Detektor (16) befindet.

2. Bildwandler (10) nach Anspruch 1, wobei der einzelne Detektor (16) aus einem Material besteht, das ausgewählt ist aus Quecksilber-Cadmium-Tellurid, Indium-GalliumArsenid und Indium-Antimonid.

3. Bildwandler (10) nach Anspruch 1 oder 2, wobei der Bildwandler (10) einen zweiten Reflektor (50) mit einem zweiten Hintergrund (52) bei einer Temperatur umfasst, die streng unter der ersten Temperatur (T1) ist, wobei der zweite Reflektor (50) positioniert ist, damit sich das Bild des zweiten Hintergrunds (52) in dem zweiten Spektralband (B2) durch die Schaltoptik (20) in der ersten Position auf dem einzelnen Detektor (16) befindet.

4. Bildwandler (10) nach einem der Ansprüche 1 bis 3, wobei der erste Fluss (F1) eine erste momentane Fließgeschwindigkeit aufweist, wobei der zweite Fluss (F2) eine zweite momentane Fließgeschwindigkeit aufweist, die streng unter der ersten Fließgeschwindigkeit ist, wobei der Bildwandler (10) einen Filter (32) umfasst, der die momentane Fließgeschwindigkeit des ersten Flusses (F1) reduziert, wobei der einzelne Detektor (16) eine erste Akkumulationszeit des ersten Flusses (F1) und eine zweite Akkumulationszeit des zweiten Flusses (F2) aufweist, wobei das Verhältnis der ersten Akkumulationszeit zu der zweiten Akkumulationszeit größer als oder gleich wie 0,5 und kleiner als oder gleich wie 1,5 ist.

5. Bildwandler (10) nach einem der Ansprüche 1 bis 4, wobei der oder jeder Reflektor (26; 50) ein Narcissus-Spiegel ist.

6. Bildwandler (10) nach einem der Ansprüche 1 bis 5, wobei der Bildwandler (10) ferner Folgendes umfasst:
- einen ersten optischen Pfad (22), der geeignet ist, um den ersten Fluss (F1) zwischen dem Separator (18) und der Schaltoptik (20) zu transportieren, und
- einen zweiten optischen Pfad (24), der geeignet ist, um den zweiten Fluss (F2) zwischen dem Separator (18) und der Schaltoptik (20) zu transportieren,
wobei jeder optische Pfad (22, 24) mindestens ein Element umfasst, das ausgewählt ist aus der Gruppe, bestehend aus einer optischen Linse, einem Spiegel, einem Prisma, einem Strahlteiler und einer Vergrößerungsoptik, die geeignet ist, einen Vergrößerungskoeffizienten auf den durch den optischen Pfad geleiteten Fluss anzuwenden.

7. Bildwandler (10) nach einem der Ansprüche 1 bis 6, wobei der Separator (18) eine dichroitische Platte ist.

8. Bildwandler (10) nach einem der Ansprüche 1 bis 7, wobei mindestens eine der folgenden Eigenschaften überprüft wird:
- das erste Spektralband (B1) umfasst Wellenlängen zwischen 8 Mikrometern und 12 Mikrometern,
- das erste Spektralband (B1) umfasst Wellenlängen zwischen 3 Mikrometern und 5 Mikrometern,
- das zweite Spektralband (B2) umfasst Wellenlängen zwischen 1 Mikrometern und 2 Mikrometern, und
- das zweite Spektralband (B2) umfasst Wellenlängen zwischen 3 Mikrometern und 5 Mikrometern.

9. Optronisches System, umfassend einen Bildwandler (10) nach einem der Ansprüche 1 bis 8.

10. Plattform, umfassend ein optronisches System nach Anspruch 9.

## Claims

1. An infrared imager (10) suitable for detecting an infrared flux in a first and a second spectral band (B1, B2), the first band (B1) and the second band (B2) being continuous and noncontiguous with one another, the imager (10) comprising an enclosure (12), the enclosure (12) having a first temperature (T1), the enclosure (12) comprising:
- a separator (18) separating an incident infrared flux (FI) into two separate fluxes, the first flux (F1) being the portion of the incident infrared flux (FI) in the first spectral band (B1) and the second flux (F2) being the portion of the incident infrared flux (FI) in the second spectral band (B2),
- a single detector (16) able to detect a flux in both spectral bands (B1, B2), the single detector (16) being cooled to a second temperature (T2), the second temperature (T2) being strictly lower than the first temperature (T1),
- a switching optic (20) movable between a first position in which the first flux (F1) is sent to the single detector (16) and a second position in which the second flux (F2) is sent to the single detector (16), and
- a first reflector (26) having a first bottom (40) at a temperature strictly below the first temperature (T1), the first reflector (26) being positioned so that the image of the first bottom (40) in the first spectral band (B1) by the switching optic (20) in the second position is situated on the single detector (16).

2. The imager (10) according to claim 1, wherein the single detector (16) is made from a material chosen from among Mercury Cadmium Telluride, Indium-Gallium Arsenide and Indium Antimonide.

3. The imager (10) according to claim 1 or 2, wherein the imager (10) comprises a second reflector (50) having a second bottom (52) at a temperature strictly below the first temperature (T1), the second reflector (50) being positioned so that the image of the second bottom (52) in the second spectral band (B2) by the switching optic (20) in the first position is situated on the single detector (16).

4. The imager (10) according to any one of claims 1 to 3, wherein the first flux (F1) has a first instantaneous flow rate, the second flux (F2) having a second instantaneous flow rate strictly less than the first flow rate, the imager (10) comprising a filter (32) reducing the instantaneous flow rate of the first flux (F1), the single detector (16) having a first accumulation time of the first flux (F1) and a second accumulation time of the second flux (F2), the ratio between the first accumulation time and the second accumulation time being greater than or equal to 0.5 and less than or equal to 1.5.

5. The imager (10) according to any one of claims 1 to 4, wherein the or each reflector (26; 50) is a Narcissus effect mirror.

6. The imager (10) according to any one of claims 1 to 5, wherein the imager (10) further comprises:
- a first optical path (22) able to transport the first flux (F1) between the separator (18) and the switching optic (20), and
- a second optical path (24) able to transport the second flux (F2) between the separator (18) and the switching optic (20),
each optical path (22, 24) comprises at least one element chosen from the group made up of: an optical lens, a mirror, a prism, a separating blade and a magnifying optic able to apply a magnification coefficient to the flux transported by said optical path.

7. The imager (10) according to any one of claims 1 to 6, wherein the separator (18) is a dichroic blade.

8. The imager (10) according to any one of claims 1 to 7, wherein at least one of the following properties is verified:
- the first spectral band (B1) comprises wavelengths of between 8 micrometers and 12 micrometers,
- the first spectral band (B1) comprises wavelengths of between 3 micrometers and 5 micrometers,
- the second spectral band (B2) comprises wavelengths of between 1 micrometers and 2 micrometers, and
- the second spectral band (B2) comprises wavelengths of between 3 micrometers and 5 micrometers.

9. An optronic system comprising an imager (10) according to any one of claims 1 to 8.

10. A platform comprising an optronic system according to claim 9.
